# EUROPEAN PATENT SPECIFICATION

(11) **EP 3 050 980 B1**
(45) Date of publication and mention of the grant of the patent: **14.11.2018**
(21) Application number: 13894412.9
(22) Date of filing: 25.09.2013
(51) Int. Cl.: B23P 6/00, C21D 1/34, C21D 1/42, C21D 6/00, C21D 9/08, C21D 9/50, C21D 1/70

(54) **RESTORATION HEAT-TREATMENT METHOD FOR CREEP-DAMAGED HEAT-RESISTANT METAL MEMBER**
WIEDERHERSTELLENDES WÄRMEBEHANDLUNGSVERFAHREN FÜR HITZEBESTÄNDIGES KRIECHBESCHÄDIGTES METALLELEMENT
PROCÉDÉ DE TRAITEMENT THERMIQUE DE RESTAURATION POUR ÉLÉMENT MÉTALLIQUE RÉSISTANT À LA CHALEUR ENDOMMAGÉ PAR FLUAGE

(43) Date of publication of application: 03.08.2016
(73) Proprietor: The Chugoku Electric Power Co., Inc., Hiroshima-shi, Hiroshima 730-8701 (JP)
(72) Inventor: NISHIDA, Hidetaka, Hiroshima-shi Hiroshima 730-8701 (JP)
(74) Representative: Osha Liang
(86) International application number: PCT/JP2013/075925
(87) International publication number: WO 2015/045036

(56) References cited:
- JP-A- H0 688 120
- JP-A- S6 328 825
- JP-A- 2003 253 337
- JP-A- 2010 236 006
- JP-A- 2013 136 797
- JP-A- 2013 136 797

## Description

### Technical Field

The present invention relates to a regenerative heat treatment method for a heat-resistant metal member suffering from creep damage.

### Background Art

Hitherto, as a method to regenerate locations degraded by creep damage in high temperature members, such as those employed in thermal or nuclear power plants, or chemical plants (for example, high temperature resistant welds of boilers and turbines, and base material for high temperature pipes, headers, nozzles and the like), a method has been developed in which, for example, the high temperature member is secured by clamps, and regenerative heat treatment is then performed by heating a creep degraded section in a state in which thermal expansion at the creep degraded section between the clamps is restricted in the directions towards clamp secured sections (see JP 2003-253337 A) . Patent documents JP 2010-236006 A and JP 2013-136797 A disclose other examples of regenerative methods.

### Summary of Invention

### Technical Problem

However, there is a problem with a method such as that described above, in that thermal expansion in the creep degraded section, occurring when the creep degraded section is heated, cannot be restricted in a direction toward the outer periphery of the above member.

An object of the present invention is to provide a method capable of restricting thermal expansion in a direction toward an outer periphery of a member occurring when a heat-resistant metal member suffering from creep damage is heated, and capable of performing efficient regenerative heat treatment on the heat-resistant metal member suffering from creep damage.

### Solution to Problem

In order to address the above problem, a regenerative heat treatment method for a heat-resistant metal member suffering from creep damage according to the present invention includes the configuration defined in appended claim 1.

### Advantageous Effects of Invention

The present invention enables provision of a method capable of restricting thermal expansion in a direction toward an outer periphery of a heat-resistant metal member suffering from creep damage occurring when the member is heated, and capable of performing efficient regenerative heat treatment on the heat-resistant metal member suffering from creep damage.

### Brief Description of Drawings

Fig. 1 is a schematic diagram illustrating a regenerative heat treatment method for a heat-resistant metal member suffering from creep damage, to explain an embodiment of the present invention.
Fig. 2 is a schematic cross-section illustrating a cross-section of Fig. 1 to explain an embodiment of the present invention. Description of Embodiments

Detailed explanation follows regarding preferable embodiments of the present invention, with reference to the appended drawings. Note that the objects, features, advantages, and ideas of the present invention will be clear to a person of ordinary skill in the art from the content of the present specification, and a person of ordinary skill in the art would easily be able to reproduce the present invention from the present specification. The following embodiments, drawings, and the like of the present invention illustrate preferable embodiments of the present invention, and are there to give examples and for the purpose of explanation; however, the present invention is not limited thereto. It will be obvious to a person of ordinary skill in the art that various modifications may be implemented based on the content of the present specification while remaining within the scope of the invention defined in the appended claims.

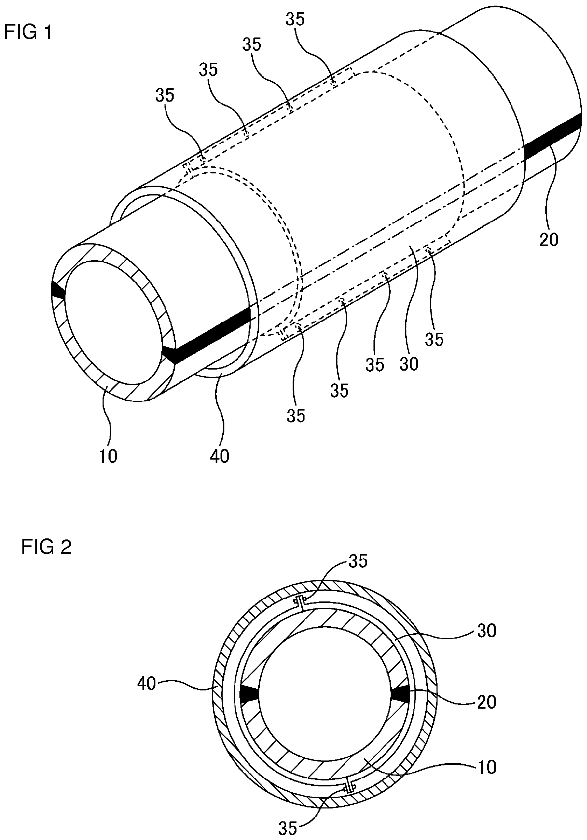

Fig. 1 is a schematic diagram illustrating a regenerative heat treatment method for a heat-resistant metal member suffering from creep damage, to explain an embodiment of the present invention. Fig. 2 is a schematic cross-section illustrating a cross-section of Fig. 1 to explain an embodiment of the present invention. Explanation follows of an example of the present embodiment in which a high temperature pipe, which has been manufactured using a heat-resistant metal material and damaged by creep with use, serves as a heat-resistant metal member 10; however, there is no limitation thereto. The heat-resistant metal member 10 may be another high temperature member, such as a turbine, which has been manufactured using a heat-resistant metal material and damaged by creep with use.

As illustrated in Fig. 1 and Fig. 2, in the regenerative heat treatment method of the heat-resistant metal member 10 suffering from creep damage according to the present invention, first the heat-resistant metal member 10 (including a weld 20 therein; similar applies below), which has been manufactured using a heat-resistant metal material and damaged by creep with use, is covered by a heat-resistant covering member 30 so as to contact the outer periphery of the heat-resistant metal member 10, and the heat-resistant covering member 30 is secured. The heat-resistant metal member 10 covered by the heat-resistant covering member 30 is then heated for a specific duration at a temperature of 1000°C or greater using a heater 40.

Covering and securing the heat-resistant metal member 10 suffering from creep damage, by the heat-resistant covering member 30, and heating to a temperature of 1000°C or greater, as described above, enables compressive force to act on the heat-resistant metal member 10 undergoing thermal expansion in a direction toward the outer periphery, and enables efficient regenerative heat treatment to be performed on the heat-resistant metal member suffering from creep damage, while restraining thermal expansion in the direction toward the outer periphery of the heat-resistant metal member 10. More specifically, any creep voids or cracks are efficiently repaired using the force from thermal expansion toward the outer periphery of the heat-resistant metal member 10 and the structure of the heat-resistant metal member 10 is returned to a new material state (for example, an austenitic structure), thus enabling the lifespan of the heat-resistant metal member 10 to be extended.

In the method for regenerative heat treatment of a heat-resistant metal member suffering from creep damage according to the present invention, etching treatment, or shot peening and etching treatment, may be performed on the section to be covered by the heat-resistant covering member 30 prior to covering the heat-resistant metal member 10 by the heat-resistant covering member 30 and securing. Such processing enables work hardening of the surface layer of the heat-resistant metal member 10 to be performed by plastic deformation, enables residual compressive stress to be imparted to the surface of the heat-resistant metal member 10, and enables any oxidized film on the surface of the heat-resistant metal member 10 to be removed.

In the regenerative heat treatment method for a heat-resistant metal member suffering from creep damage according to the present invention, processing to remove (reduce) residual stress, such as stress relief or tension annealing, may be performed after the heat-resistant metal member 10 covered by the heat-resistant covering member 30 has been heated to a temperature of 1000°C or greater using the heater 40. More specifically, after the heat-resistant metal member 10 covered by the heat-resistant covering member 30 has been heated to a temperature of 1000°C or greater using the heater 40, the heat-resistant metal member 10 maybe first cooled to room temperature, then reheated to a temperature of an A₁ transformation point or greater (preferably from 10°C to 100°C above 1000°C) for a specific duration (for example, from approximately several hours to approximately 24 hours).

Moreover, in the regenerative heat treatment method for a heat-resistant metal member suffering from creep damage according to the present invention, in order to restrict thermal expansion toward the outside in the length direction of the heat-resistant metal member 10 (in directions toward the ends of the heat-resistant metal member 10) occurring when a creep degraded section of the heat-resistant metal member 10 is covered by the heat-resistant covering member 30 and heated by the heater 40, the heat-resistant metal member 10 may be secured in sections not being heated by the heater 40, by, for example, two clamps so as to sandwich the section being heated by the heater 40. This thereby enables any creep voids, cracks, or the like to be efficiently repaired.

In the cases in which the section heated by the heater 40 is small compared to the overall heat-resistant metal member 10, there is no need to secure the heat-resistant metal member 10 in sections not being heated by the heater 40 with clamps or the like, since thermal expansion toward the outside in the length direction of the heat-resistant metal member 10 in the section being heated by the heater 40 is restricted by the sections not being heated by the heater 40.

Examples of the heat-resistant metal of the member 10 include 0.3Mo steel, 0.5Mo steel, 0.5Cr-0.5Mo steel, 1Cr-0.2Mo steel, 1Cr-0.5Mo steel, 1.25Cr-0.5Mo steel, 2.25Cr-1Mo steel, 5Cr-0.5Mo steel, 7Cr-0.5Mo steel, 9Cr-1Mo steel, 0.3Cr-Mo-V steel, 0.5Cr-Mo-V steel, 9Cr-Mo-V steel, 12Cr-Mo-V steel, 1Cr-1.25Mo-0.25V steel, 9Cr-1Mo-W steel, SUS304, SUS304L, SUS316, SUS316L, SUS316TI, SUS317, SUS321, SUS347H, SUS310S, Super304, SUS904L, NCF600, NCF601, NCF800, and NCF800H; however, there is no limitation thereto. Any known material used for members employed in thermal or nuclear power generation units or other high temperature plants may be employed as the heat-resistant metal for the member 10.

There are no particular limitations to the heat-resistant covering member 30, as long as it is capable of covering the heat-resistant metal member 10 so as to make contact with the outer periphery of the heat-resistant metal member 10 suffering from creep damage, as long as it is made from a heat-resistant material that restrains thermal expansion in the direction toward the outer periphery of the heat-resistant metal member 10 occurring when heated to the heating temperature mentioned above, and is able to maintain the approximate profile of the heat-resistant metal member 10. A material having a lower thermal expansion coefficient than the heat-resistant metal member 10 at temperatures of the heating temperature mentioned above or greater is employed for the heat-resistant covering member 30. In the cases in which the heat-resistant covering member 30 is configured from a heat-resistant material different from that of the heat-resistant metal member 10, yet having a thermal expansion coefficient of about the same as the heat-resistant metal member 10, or from a heat resistant material having a higher thermal expansion coefficient than the heat-resistant metal member 10, in order to restrain the thermal expansion of the heat-resistant covering member 30 occurring when heated to the heating temperature mentioned above, the outer periphery of the heat-resistant covering member 30 may be secured by a member of a heat-resistant material having a lower thermal expansion coefficient than the heat-resistant metal member 10 at or above the heating temperature mentioned above, so as to maintain the profile of the heat-resistant covering member 30.

Examples of the heat-resistant material of the heat-resistant covering member 30 include ceramics such as alumina, zirconia, aluminum nitride, silicon carbide, silicon nitride, cordierite, sialon, zircon, and mullite, and alloys such as Alloy 903, Alloy 909, and HRA 929.

The form of the heat-resistant covering member 30 is, for example, of a cord, plate, or clamp form. Securing of the above may be accomplished by, for example, wrapping a cord-shaped or plate-shaped heat-resistant covering member 30 around the outer periphery of the heat-resistant metal member 10 suffering from creep damage, by attaching a clamp-shaped heat-resistant covering member 30 to the outer periphery of the heat-resistant metal member 10 suffering from creep damage, or by attaching a heat-resistant covering member 30 formed in a plate shape or the like to the outer periphery of a heat-resistant metal member suffering from creep damage using fasteners, such as clamps or screws. In the present embodiment, the heat-resistant covering member 30 is made from fittings including two substantially semi-circular arc cross-section shapes. The heat-resistant covering member 30 is then secured to the surface of the heat-resistant metal member 10 using threaded members 35 attached to flanges of these fittings, such that the inner face of the fittings contact the outer periphery of the heat-resistant metal member 10 suffering from creep damage. The threaded members 35 are manufactured, for example, from the same material as the heat-resistant covering member 30.

The heating temperature of the heat-resistant metal member 10 covered by the heat-resistant covering member 30 is not particularly limited, as long as it is a temperature of 1000°C or greater. Preferably the heat-resistant metal member 10 is heated to a temperature of, or greater than, an A₃ transformation point of the component of the heat-resistant metal of the member 10 having the highest A₃ transformation point (preferably from 10°C to 100°C above 1000°C) for a specific duration (for example, from approximately several hours to approximately 24 hours) . In the present embodiment, as a heating device, the high frequency heater 40 with capability to heat the heat-resistant metal member 10 covered by the heat-resistant covering member 30 from the outer periphery is employed, there is no particular limitation thereto, as long as a heating device capable of heating the heat-resistant metal member 10 at a section covered by the heat-resistant covering member 30 is employed.

### Reference Signs List

- 10: heat-resistant metal member
- 20: weld
- 30: heat-resistant covering member
- 35: threaded member
- 40: high frequency heater

## Claims

1. A regenerative heat treatment method for a heat-resistant metal member (10) suffering from creep damage, the method comprising:
covering the heat-resistant metal member (10) by a heat-resistant covering member (30) having a lower thermal expansion coefficient than the heat-resistant metal member (10) and securing so as to contact an outer periphery of the heat-resistant metal member; and
heating the heat-resistant metal member (10) covered by the heat-resistant covering member (30) to a temperature of 1000°C or greater using a heater, from an outer periphery of the heat-resistant covering member (30),
wherein the heater is capable of heating the heat-resistant metal member (10) at a section covered by the heat resistant covering member (30), and
wherein the heater is a high frequency heater (40).

2. The method according to claim 1, wherein,
the heat-resistant metal member (10) is a steel member, and
after heating the heat-resistant metal member (10) covered by the heat-resistant covering member (30) to a temperature of 1000°C or greater, the heat-resistant metal member (10) covered by the heat-resistant covering member (30) is cooled and re-heated to a temperature of an A₁ transformation point or greater.

3. The method according to claim 2, wherein the heat-resistant metal member (10) covered by the heat-resistant covering member (30) is first cooled to room temperature and then re-heated to a temperature from 1010°C to 1100°C.

## Patentansprüche

1. Regeneratives Wärmebehandlungsverfahren für ein hitzebeständiges Metallelement (10) mit Kriechschaden, wobei das Verfahren umfasst:
Umhüllen des hitzebeständigen Metallelements (10) durch ein hitzebeständiges Umhüllungselement (30) mit einem niedrigeren Wärmeausdehnungskoeffizienten als das hitzebeständige Metallelement (10), und Befestigen, so dass es einen Außenumfang des hitzebeständigen Metallelements berührt; und
Erwärmen des hitzebeständigen Metallelements (10), das durch das hitzebeständige Umhüllungselement (30) umhüllt ist, auf eine Temperatur von 1000°C oder mehr mithilfe eines Erhitzers, von einem Außenumfang des hitzebeständigen Umhüllungselements (30),
wobei der Erhitzer in der Lage ist, das hitzebeständige Metallelement (10) an einem Abschnitt zu erhitzen, der durch das hitzebeständige Umhüllungselement (30) umhüllt ist, und
wobei der Erhitzer ein Hochfrequenzerhitzer (40) ist.

2. Verfahren nach Anspruch 1, wobei
das hitzebeständige Metallelement (10) ein Stahlelement ist, und
nach dem Erhitzen des hitzebeständigen Metallelements (10), das durch das hitzebeständige Umhüllungselement (30) umhüllt wird, auf eine Temperatur von 1000°C oder mehr das hitzebeständige Metallelement (10), das durch das hitzebeständige Umhüllungselement (30) umhüllt wird, abgekühlt und erneut auf eine Temperatur eines A₁ Transformationspunkts oder mehr erhitzt wird.

3. Verfahren nach Anspruch 2, wobei das hitzebeständige Metallelement (10), das durch das hitzebeständige Umhüllungselement (30) umhüllt wird, zunächst auf Raumtemperatur gekühlt wird, und dann erneut auf eine Temperatur von 1010°C bis 1100°C erhitzt wird.

## Revendications

1. Procédé de traitement thermique régénératif pour un élément métallique résistant à la chaleur (10) endommagé par fluage, ledit procédé comprenant :
le revêtement de l'élément métallique résistant à la chaleur (10) par un élément de revêtement résistant à la chaleur (30) ayant un coefficient de dilatation thermique inférieur à celui de l'élément métallique résistant à la chaleur (10) et la fixation de celui-ci de manière à être en contact avec une périphérie externe de l'élément métallique résistant à la chaleur ; et
le chauffage de l'élément métallique résistant à la chaleur (10) revêtu de l'élément de revêtement résistant à la chaleur (30) à une température supérieure ou égale à 1000°C, à l'aide d'un appareil de chauffage, à partir d'une périphérie externe de l'élément de revêtement résistant à la chaleur (30),
dans lequel le dispositif de chauffage est capable de chauffer l'élément métallique résistant à la chaleur (10) au niveau d'une section revêtue de l'élément de revêtement résistant à la chaleur (30), et
dans lequel le dispositif de chauffage est un dispositif de chauffage à haute fréquence (40).

2. Procédé selon la revendication 1, dans lequel
l'élément métallique résistant à la chaleur (10) est un élément en acier, et
après le chauffage de l'élément métallique résistant à la chaleur (10) revêtu de l'élément de revêtement résistant à la chaleur (30) à une température supérieure ou égale à 1000°C, l'élément métallique résistant à la chaleur (10) revêtu de l'élément de revêtement résistant à la chaleur (30) est refroidi, puis chauffé à nouveau jusqu'à une température d'un point de transformation A₁, voire supérieure.

3. Procédé selon la revendication 2, dans lequel l'élément métallique résistant à la chaleur (10) revêtu de l'élément de revêtement résistant à la chaleur (30) est tout d'abord refroidi à la température ambiante, puis est chauffé à nouveau jusqu'à une température comprise entre 1010°C et 1100°C.
